# EUROPEAN PATENT APPLICATION

(11) **EP 4 494 451 A1**
(43) Date of publication of application: **22.01.2025**
(21) Application number: 24185863.8
(22) Date of filing: 02.07.2024
(51) Int. Cl.: A01F 15/04

(54) **SQUARE BALER IMPLEMENT**

(30) Priority: 19.07.2023 US 202318354736
(71) Applicant: Deere & Company, Moline, IL 61265 (US)
(72) Inventor: JADHAO, UMESH B, 69123 Mannheim (DE); VADNERE, MOHAN A, 68163 Mannheim (DE); KULKARNI, NIKHIL, 68163 Mannheim (DE); SOMAROWTHU, MAHESH, 68163 Mannheim (DE)
(74) Representative: Stein, Stefan

(57) **Abstract**

A baler implement includes a pre-compression passageway including a lower passage wall having an access panel. The access panel is moveable between an operating position and an access position. A panel actuator is coupled to the access panel for moving the access panel. A feed system includes at least one feeder fork operable to move crop material through the pre-compression passageway. A drive system is coupled to the feed system and includes a power source that is selectively controllable to move the feed system in a first direction during a baling operation and move the feed system in a second direction during an un-plugging operation. A baler controller is operable to identify a plug condition from data related to an operating characteristic of the baling operation and may then automatically initiate the un-plugging operation when the plug condition is identified.

## Description

### TECHNICAL FIELD

The disclosure generally relates to a baler implement, and more particularly to a square baler implement operable to form crop material into a bale having a parallelepiped shape.

### BACKGROUND

Agricultural balers gather, compress, and shape crop material into a bale. There are different types of baler implements. One example of a baler implement may be referred to as a square baler implement, and is operable to create a bale having parallelepiped bales, i.e., square bales. Square baler implements have been used in crop harvesting for many years, and utilize a compression system including a gearbox with a crank arm and connecting rod which are attached to a reciprocating plunger. During each rotation of the crank arm, the reciprocating plunger compresses the crop in a baling or compression chamber as the plunger moves towards the rear of the baler.

A square baler implement may include a pick-up which gathers crop material from a ground surface of the field and moves the gathered crop material into a pre-compression passageway. The crop material is collected in the pre-compression passageway until the plunger is retracted, at which time a plurality of feeder forks move the collected crop material from the pre-compression passageway, through a chamber inlet, and into the compression chamber. Certain operating and/or crop conditions may cause the pre-compression passageway to become plugged with crop material, such that the feeder forks are unable to move the crop material into the compression chamber. The pre-compression passageway must then be un-plugged before further baling operations may continue.

### SUMMARY

A baler implement is provided. The baler implement includes a pre-compression passageway. The pre-compression passageway includes a lower passage wall having an access panel. The access panel is moveable between an operating position for guiding crop material through the pre-compression passageway, and an access position for opening and providing access to the pre-compression passageway. A panel actuator is coupled to the access panel. The panel actuator is selectively controllable between a first state positioning the access panel in the operating position and a second state positioning the access panel in the access position. A feed system includes at least one feeder fork operable to move crop material through the pre-compression passageway. A drive system is coupled to the feed system. The drive system includes a power source that is selectively controllable to move the feed system in a first direction during a baling operation and move the feed system in a second direction during an un-plugging operation. A baler controller includes a processor and a memory having a feed control algorithm stored thereon. The processor is operable to execute the feed control algorithm to identify a plug condition from data related to an operating characteristic of the baling operation. The plug condition indicates a plug of crop material in the pre-compression passageway. The baler controller may then automatically initiate the un-plugging operation when the plug condition is identified.

In one aspect of the disclosure the baler implement further includes a baler sensor. The baler sensor is operable to sense data related to the operating characteristic of the baling operation associated with movement of crop material through the pre-compression passageway. In one implementation, the baler sensor may include an optical sensor that is positioned to capture an image of crop material disposed within the pre-compression passageway. In another implementation, the baler sensor may include a force sensor coupled to the feed system. The force sensor may be operable to detect data related to a force applied to the feeder fork as the feeder fork moves through the pre-compression passageway. In another implementation, the baler implement may include a pick-up that is operable to gather and move crop material, with the pre-compression passageway positioned to receive the crop material from the pick-up. The pick-up may include a shaft member rotatable about an axis during operation.
The baler sensor may include a rotational speed sensor positioned and operable to detect data related to a rotational speed of the shaft member.

In one aspect of the disclosure, the un-plugging operation may include the processor executing the feed control algorithm to communicate a stop command. In one implementation, communicating the stop command may include the processor executing the feed control algorithm to automatically stop forward movement of an associated traction unit. In another implementation, communicating the stop command may include the processor executing the feed control algorithm to communicate an instruction to an operator of an associated traction unit. The instruction may include a request for the operator stop forward movement of the associated traction unit.

In one aspect of the disclosure, the un-plugging operation may include the processor executing the feed control algorithm to control the panel actuator from the first state, positioning the access panel in the operating position, to the second state, positioning the access panel in the access position.

In one aspect of the disclosure, the un-plugging operation may include the processor executing the feed control algorithm to control the power source of the drive system. The power source is controlled to move the feed system in the second direction to dislodge the plug of crop material in the pre-compression passageway when the access panel is in the second state. With the access panel in the second state, i.e., open, the crop material dislodged from the pre-compression passageway may fall out or be discharged from the pre-compression passageway through the opening of the access panel.

In one aspect of the disclosure, the un-plugging operation may include the processor executing the feed control algorithm to control the panel actuator from the second state, positioning the access panel in the access position, into the first state, positioning the access panel in the operating position, after moving the feed system in the second direction for a defined period of time. The defined period of time may be pre-defined, or may be based on a measured or sensed characteristic.

In one aspect of the disclosure, the un-plugging operation may include the processor executing the feed control algorithm to determine if the plug of crop material is dislodged from the pre-compression passageway. In one aspect of the disclosure, the un-plugging operation may include the processor executing the feed control algorithm to control the panel actuator from the second state, positioning the access panel in the access position, into the first state, positioning the access panel in the operating position, after the plug of the crop material has been determined to be dislodged from the pre-compression passageway.

In one aspect of the disclosure, the un-plugging operation may include the processor executing the feed control algorithm to control the power source of the drive system. The power source may be controlled to move the feed system in the first direction after moving the feed system in the second direction for a defined period of time or until the plug of crop material has been determined to be dislodged from the pre-compression passageway.

In one aspect of the disclosure, the un-plugging operation may include the processor executing the feed control algorithm to communicate a start command. In one implementation, communicating the start command may include the processor executing the feed control algorithm to automatically engage forward movement of an associated traction unit. In another implementation, communicating the start command may include the processor executing the feed control algorithm to communicate an instruction to an operator of an associated traction unit. The instruction may include a request for the operator to engage forward movement of the associated traction unit to begin the baling operation again.

In one aspect of the disclosure, the panel actuator may include, but is not limited to, one of a hydraulic actuator, an electric actuator, or a pneumatic actuator. The hydraulic actuator may be controlled by, but is not limited to, an electrical signal, a hydraulic signal, or a combination of an electrical and hydraulic signal. The electric actuator may be controlled by, but is not limited to, an electrical signal or current. The pneumatic actuator may be controlled by, but is not limited to, an electrical signal, a pneumatic signal, or a combination of an electrical and pneumatic signal.

Accordingly, the baler implement described herein may automatically initiate the un-plugging operation when a plug condition is detected by the baler controller. The baler controller may control the forward movement of the baler implement via the traction unit, open the access panel, engage the power source of the drive system to operate in the second direction, e.g., in a reverse operating direction, to dislodge and discharge the plug from the pre-compression passageway. Once the plug has been removed, the baler controller may then configure the baler implement for normal baling operations. By so doing, the baler implement may automatically dislodge the plug from the pre-compression passageway, thereby relieving the operator of the baler implement from manually removing the plug, i.e., manually opening the access panel, manually reversing the power source, and manually closing the access panel. The baler implement described herein thereby enables automated and/or autonomous operation of the baler implement.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a traction unit pulling an associated baler implement.
FIG. 2 is a schematic cross sectional side view of the baler implement.
FIG. 3 is a schematic cross sectional side view of the baler implement showing a pre-compression passageway with an access panel disposed in an operating position.
FIG. 4 is a schematic cross sectional side view of the baler implement showing the pre-compression passageway with the access panel disposed in an access position.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

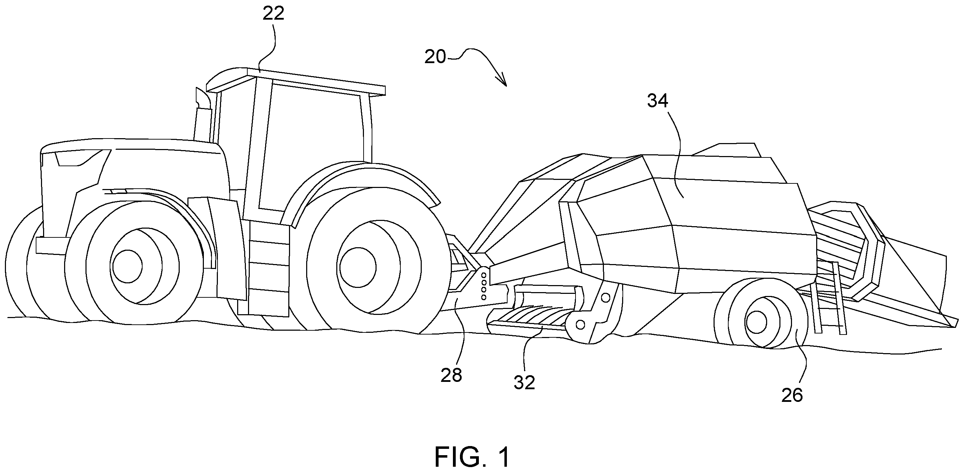

Referring to the Figures, wherein like numerals indicate like parts throughout the several views, a baler implement is generally shown at 20. Referring to FIG. 1 the baler implement 20 is shown as a large square baler. However, it should be appreciated that the teachings of this disclosure may be applied to other baler platforms, and are not limited to the example implementation of the large square baler shown in the Figures and described herein.

As shown in FIG. 1, a traction unit 20 or vehicle, such as but not limited to a tractor, is coupled to the baler implement 20 for pulling and powering the baler implement 20. However, it should be appreciated that in other implementations, the baler implement 20 may be self-propelled. As depicted in FIG. 1, the baler implement 20 may move across a field and gather and process crop material to form a bale. In the example implementation shown in the Figures and described herein, the baler implement 20 is configured to form the bale to include a parallelepiped shape, which is often referred to as a square bale or a large square bale. However, it should be appreciated that the baler implement 20 may be configured differently to form the bale to exhibit a different shape.

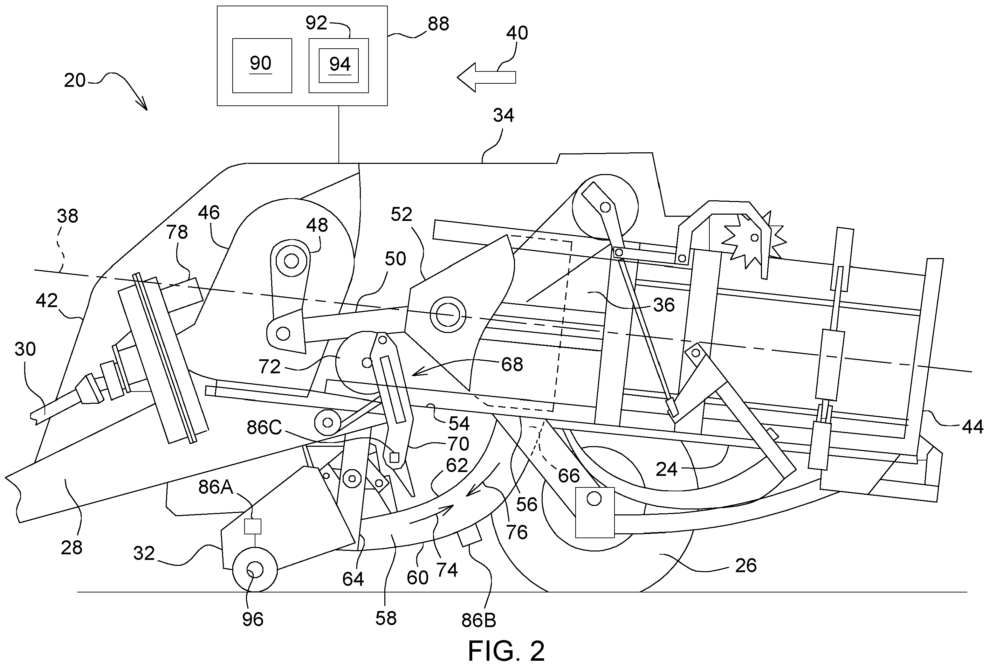

Referring to FIG. 2, the example implementation of the baler implement 20 includes a frame 24, ground engaging elements 26, such as but not limited to wheels or tracks, a hitch 28 for attachment to the tractor or other vehicle, and an input shaft 30, such as a power-take-off (PTO) shaft, which can receive rotational power from a power supply, such as the traction unit 20. The baler implement 20 includes a pick-up 32 which gathers crop material from the ground surface and feeds it into the baler implement 20. The pick-up 32 mechanism may include various apparatus including, but not limited to, tines, forks, augers, conveyors, baffles, a cutter assembly, or any combination of the preceding. The baler implement 20 includes a housing 34 or body, which generally shields various internal components of the baler implement 20. The housing 34 includes multiple wall sections that form a compression chamber 36 configured for forming the crop material into the bale. The housing 34, which forms the compression chamber 36, extends along a central longitudinal axis 38. The central longitudinal axis 38 extends between a forward end 42 of the frame 24 or housing 34, and a rearward end 44 of the frame 24 or housing 34. As used herein, the term forward and rearward may be interpreted with respect to the direction of travel 40 of the baler implement 20 while gathering crop material.

The input shaft 30 or PTO shaft is connected to an input of a transmission 46 to provide rotational power to the baler implement 20 from the traction unit 20 or other associated vehicle or power supply. The transmission 46 includes a gearbox which converts the rotational motion of the input shaft 30 along the central longitudinal axis 38 of the baler implement 20 to an output of the transmission 46 having a rotational motion along a generally transverse axis of the baler implement 20. As used herein, the term "transverse" may be interpreted as extending perpendicular to the central longitudinal axis 38 of the baler implement 20, between a left side and a right side of the baler implement 20 relative to the direction of travel 40 of the baler implement 20 while gathering crop material.

The baler implement 20 includes a crank arm 48 connected to the output of the transmission 46. A connecting link 50 interconnects the crank arm 48 and a plunger 52. The crank arm 48 rotates based upon the output of the transmission 46 and the plunger 52 moves in a reciprocal motion within the compression chamber 36 as the crank arm 48 rotates. The plunger 52 extends into the compression chamber 36, thereby compressing the crop material, and then at least partially retracts from the compression chamber 36 to allow more crop material to enter the compression chamber 36.

As described above, the housing 34 includes multiple wall sections that form the compression chamber 36. As such, the housing 34 includes a bottom wall 54 that partially defines a lower boundary of the compression chamber 36. The bottom wall 54 defines a chamber inlet 56, which provides access for moving the crop material into the compression chamber 36.

A pre-compression passageway 58 interconnects the pick-up 32 and the chamber inlet 56. In the example implementation shown in the Figures and described herein, the pre-compression passageway 58 is defined and/or bounded by a lower passage wall 60 and an upper passage wall 62. While not shown in the Figures, it should be appreciated that the pre-compression passageway 58 may further be defined by and/or bounded by a first or left lateral side wall and a second or right lateral side wall. The pre-compression passageway 58 is a generally closed passage having an inlet 64 adjacent to the pick-up 32 for receiving the crop material from the pick-up 32, and an outlet 66 adjacent the chamber inlet 56 for discharging the crop material through the chamber inlet 56 and into the compression chamber 36. The pre-compression passageway 58 forms a generally arcuate path for moving the crop material rearward and upward relative to the direction of travel 40 of the baler implement 20.

The baler implement 20 includes a feed system 68 for moving the crop material through the pre-compression passageway 58 and into the compression chamber 36. The feed system 68 includes a plurality of feeder forks 70. A drive system 72 is coupled to the feed system 68 for moving the feeder forks 70 of the feed system 68. The drive system 72 includes a power source that is selectively controllable to move the feed system 68 in either a first direction 74 or a second direction 76. The power source may be controlled to move the feeder forks 70 in the first direction 74 during a baling operation. The power source may be controlled to move the feeder forks 70 in the second direction 76 during an un-plugging operation.

In the example implementation described herein, the feeder forks 70 are timed with the plunger 52 to move the crop material into the compression chamber 36 when the plunger 52 is retracted. In baling operations, i.e., with the feeder forks 70 moving in the first direction 74, the feeder forks 70 are staged in an initial or starting position, are inserted into the pre-compression passageway 58 and sweep rearward and upward, pushing the crop material nearer and then into the chamber inlet 56, whereupon the feeder forks 70 are withdrawn from the pre-compression passageway 58 and returned to the initial or starting position for the subsequent cycle. In un-plugging operations, i.e., with the feeder forks 70 moving in the second direction 76, the feeder forks 70 may start in the initial or starting position, be moved toward and adjacent to the chamber inlet 56, inserted into the pre-compression passageway 58, whereafter the feeder forks 70 are moved downward and forward toward the inlet 64 of the pre-compression passageway 58. Thereafter the feeder forks 70 may be moved back into the initial or starting position.

The drive system 72 may include a system of linkages connecting the feeder forks 70 to the transmission 46, whereby the feeder forks 70 are drivenly coupled to the transmission 46. The power source may include, but is not limited to, a source of rotational power and/or torque applied to the transmission 46 that is capable of being selectively controlled. For example, the power source may include, but is not limited to, an auxiliary motor 78, e.g., a hydraulic motor, coupled to the transmission 46 and selectively controllable to drive the transmission 46 in either an operating direction associated with normal baling operations or a reverse direction associated with the un-plugging operation. In another implementation, the power source may include the input shaft 30 itself. For example, the input shaft 30 may be coupled to an electric motor that is operable to rotate in opposite directions to drive the transmission 46 in either the operating direction to move the feed system 68 in the first direction 74, or drive the transmission 46 in the reverse direction to move the feed system 68 in the second direction 76.

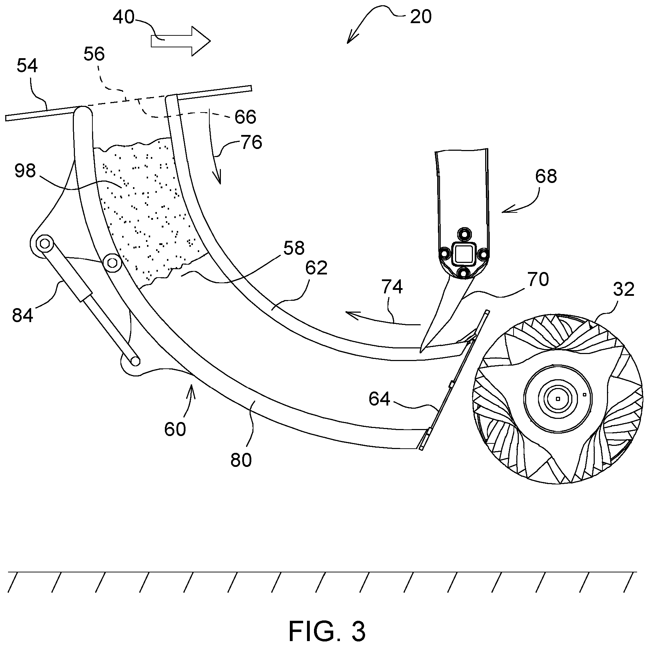

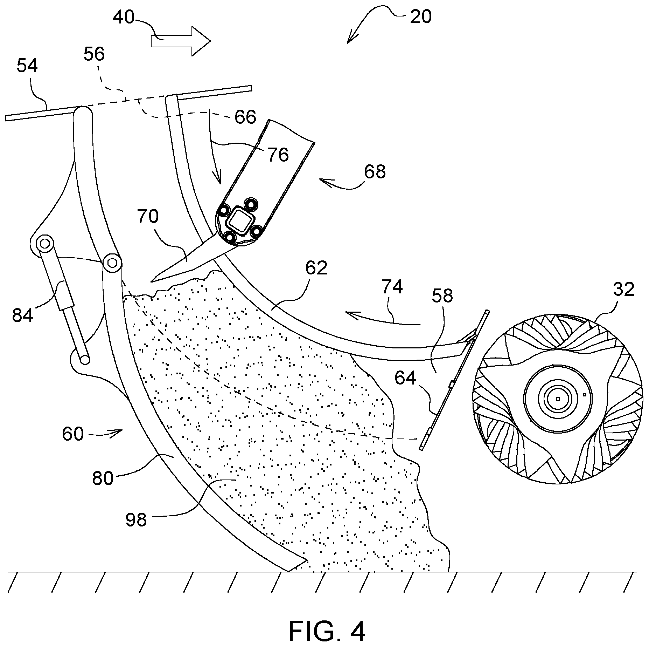

Referring to FIGS. 3 and 4, the lower passage wall 60 defines a lower boundary of the pre-compression passageway 58. In the example implementation shown in the Figures and described herein, the lower passage wall 60 includes an access panel 80. The access panel 80 is moveable between an operating position, shown in FIG. 3 and an access position, shown in FIG. 4. When the access panel 80 is disposed in the operating position, the access panel 80 is positioned to guide the crop material through the pre-compression passageway 58 from the pick-up 32 to the chamber inlet 56. When the access panel 80 is disposed in the access position, the access panel 80 is positioned for opening the pre-compression passageway 58 and for providing access to the pre-compression passageway 58 through an opening 82 extending through the lower passage wall 60. As such, when disposed in the access position, the access panel 80 is moved to expose the opening 82 into the pre-compression passageway 58 through the lower passage wall 60.

A panel actuator 84 is coupled to the access panel 80 and another structure of the baler implement 20. The panel actuator 84 is selectively controllable between a first state, shown in FIG. 3, and a second state, shown in FIG. 4. When controlled to the first state, the panel actuator 84 positions the access panel 80 in the operating position. When the panel actuator 84 is controlled to the second state, the panel actuator 84 positions the access panel 80 in the access position. The panel actuator 84 may include, for example, but is not limited to, one of a hydraulic cylinder/actuator, a linear or rotary electric actuator, or a linear or rotary pneumatic actuator. The first state may include, for example, a extended position of an extendable linear actuator, whereas the second state may include, for example, a retracted position of an extendable linear actuator. The type, configuration, operation, and connections to, the panel actuator 84 and the baler implement 20 may depend upon the specific type of actuator used, configuration and shape of the pre-compression passageway 58, or some other factor. Connections of this type between a moveable panel and a fixed structure are understood by those skilled in the art, and are therefore not described in detail herein.

Referring to FIG. 2, the baler implement 20 further includes a baler sensor 86A, 86B, 86C. The baler sensor 86A, 86B, 86C is operable to sense data related to an operating characteristic of the baling operation that is associated with movement of crop material through the pre-compression passageway 58. In other words, the baler sensor 86A, 86B, 86C may sense data related to movement of the crop material through the pre-compression passageway 58.

For example, in one implementation, the pick-up 32 may include a shaft member 96 that is rotatable about an axis during operation, with the baler sensor 86A, 86B, 86C including a rotational speed sensor 86A positioned and operable to detect data related to a rotational speed of the shaft member 96. The rotational speed of the shaft member 96 is related to the volume and/or quantity of the crop material processed and moved through pre-compression passageway 58, and may be used to determine if the pre-compression passageway 58 is plugged or not plugged. For example, if the pre-compression passageway 58 is plugged, then the rotational speed of the shaft member 96 may slow proportionally, thereby indicating the amount of crop material moving through the pre-compression passageway 58.

In another implementation, the baler sensor 86A, 86B, 86C may include an optical sensor 86B positioned to capture an image of crop material disposed within the pre-compression passageway 58. The optical sensor 86B may include, but is not limited to, a camera, a high-speed camera, an infra-red camera, a near infra-red camera, a video camera, etc. The captured image may be analyzed by an image processor 90 to determine or identify movement of the crop material through the pre-compression passageway 58. For example, the image processor 90 may identify or determine that crop material is moving through the pre-compression passageway 58 when the image was captured, thereby indicating that the pre-compression passageway 58 is not plugged. In contrast, the image processor 90 may identify or determine that crop material is present but not moving through the pre-compression passageway 58 when the image was captured, thereby indicating that the pre-compression passageway 58 is plugged.

In another implementation, the baler sensor 86A, 86B, 86C may include a force sensor 86C that is coupled to the feed system 68. The force sensor 86C may be operable to detect data related to a force applied to the feeder fork 70 or some other component of the feed system 68 as the feeder fork 70 moves through the pre-compression passageway 58. For example, increased resistance against the feeder forks 70, which is greater than a standard operating resistance level may indicate that the pre-compression passageway 58 is plugged.

It should be appreciated that the baler sensor 86A, 86B, 86C may include some other type of sensor configured to detect some other type of data other than the example implementations described herein.

As shown in FIG. 2, the baler implement 20 further includes a baler controller 88. The baler controller 88 may be disposed in communication with the baler sensor 86A, 86B, 86C, the drive system 72, and the panel actuator 84. The baler controller 88 is operable to receive data from the baler sensor 86A, 86B, 86C, and control operation of the panel actuator 84 and the drive system 72. While the baler controller 88 is generally described herein as a singular device, it should be appreciated that the baler controller 88 may include multiple devices linked together to share and/or communicate information therebetween. Furthermore, it should be appreciated that the baler controller 88 may be located on the baler implement 20 or located remotely from the baler implement 20, such as on an associated traction unit 20.

The baler controller 88 may alternatively be referred to as a computing device, a computer, a controller, a control unit, a control module, a module, etc. The baler controller 88 includes a processor 90, a memory 92, and all software, hardware, algorithms, connections, sensors, etc., necessary to manage and control the operation of the baler sensor 86A, 86B, 86C, the panel actuator 84 and the drive system 72. As such, a method may be embodied as a program or algorithm operable on the baler controller 88. It should be appreciated that the baler controller 88 may include any device capable of analyzing data from various sensors, comparing data, making decisions, and executing the required tasks.

As used herein, "baler controller 88" is intended to be used consistent with how the term is used by a person of skill in the art, and refers to a computing component with processing, memory, and communication capabilities, which is utilized to execute instructions (i.e., stored on the memory 92 or received via the communication capabilities) to control or communicate with one or more other components. In certain embodiments, the baler controller 88 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 88 may be in communication with other components on the baler implement 20, such as hydraulic components, electrical components, and operator inputs within an operator station of an associated work vehicle. The baler controller 88 may be electrically connected to these other components by a wiring harness such that messages, commands, and electrical power may be transmitted between the baler controller 88 and the other components. Although the baler controller 88 is referenced in the singular, in alternative embodiments the configuration and functionality described herein can be split across multiple devices using techniques known to a person of ordinary skill in the art.

The baler controller 88 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 92 may include any non-transitory/tangible medium which participates in providing data or computer-readable instructions. The memory 92 may be non-volatile or volatile. Non-volatile media may include, for example, optical or magnetic disks and other persistent memory. Example volatile media may include dynamic random access memory (DRAM), which may constitute a main memory. Other examples of embodiments for memory 92 include a floppy, flexible disk, or hard disk, magnetic tape or other magnetic medium, a CD-ROM, DVD, and/or any other optical medium, as well as other possible memory devices such as flash memory.

The baler controller 88 includes the tangible, non-transitory memory 92 on which are recorded computer-executable instructions, including a feed control algorithm 94. The processor 90 of the baler controller 88 is configured for executing the feed control algorithm 94. The feed control algorithm 94 implements a method of controlling the baler implement 20, described in detail below.

Referring to FIGS. 3 and 4, the method of controlling the baler implement 20 includes the baler controller 88 identifying a plug condition 98. The baler controller 88 identifies the plug condition 98 from data from the baler sensor 86A, 86B, 86C that is related to the operating characteristic of the baling operation. The plug condition 98 indicates a plug of crop material in the pre-compression passageway 58. As described above, the baler controller 88 may identify the plug condition 98 from, but not limited to, data related to a rotational speed of the shaft member 96 of the pick-up 32, an image of crop material within the pre-compression passageway 58, or a force applied against a component of the feed system 68. As noted above, the bale sensor and the data sensed thereby may differ from the example implementations described herein. As such, the baler controller 88 may identify the plug condition 98 from data that differs from the example implementations described herein.

When the baler controller 88 identifies the plug condition 98, the baler controller 88 may then automatically initiate the un-plugging operation. The un-plugging operation may include actions that are automatically executed by the baler controller 88, and/or prompts or requests for actions to be executed by an operator. In one implementation, the un-plugging operation is fully executed by the baler controller 88, whereby no actions or inputs are required from the operator. In other implementations, the un-plugging operation may be partially executed by the baler controller 88, with the operator executing other actions from within an operator's station of an associated traction unit 20, such that the operator is not required to leave or exit the operator's station.

Upon initiation of the un-plugging operation, the baler controller 88 may communicate a stop command. In one implementation, the stop command may automatically stop forward movement of the associated traction unit 20. For example, the stop command may include the baler controller 88 automatically communicating a throttle command to the traction unit 20 commanding the throttle to an idle position, whereby the traction unit 20 and the baler implement 20 come to a stop and cease movement relative to the ground surface. The stop command may further include the baler controller 88 automatically communicating a brake command to a braking system of the traction unit 20 commanding application of the braking system. In another implementation, the stop command may communicate an instruction to an operator of the associated traction unit 20 requesting the operator stop forward movement of the associated traction unit 20 and the baler implement 20. The baler controller 88 may then monitor forward motion to determine when the traction unit 20 and the baler implement 20 have stopped movement relative to the ground surface.

Once the baler implement 20 has come to a stop, the un-plugging operation may include the baler controller 88 controlling the panel actuator 84 from the first state to the second state. As described above, the first state of the panel actuator 84 positions the access panel 80 in the operating position, whereas the second state positions the access panel 80 in the access position. By commanding the panel actuator 84 from the first state to the second state, the baler controller 88 is commanding the panel actuator 84 to move the access panel 80 into the access position, i.e., an open position. The panel actuator 84 may be controlled via an electric signal, a hydraulic signal, a pneumatic signal, and/or combinations thereof as is understood by those skilled in the art, based on the specific type and operation of the panel actuator 84.

With the access panel 80 disposed in the access position, the un-plugging operation may include the baler controller 88 controlling the power source of the drive system 72 to move the feed system 68 in the second direction 76. As described above, during normal baling operations, the drive system 72 moves in the operating direction to move the feeder forks 70 in the first direction 74 and the crop material through the pre-compression passageway 58, from the pick-up 32 to the compression chamber 36. By controlling the power source to move the feed system 68 in the second direction 76, the baler controller 88 is reversing the direction of movement of the feed system 68, and thereby reversing the direction of movement of the feeder forks 70. As such, the feeder forks 70 may be staged in the initial or starting position, moved rearward and upward toward the chamber inlet 56 of the pre-compression passageway 58, inserted into the pre-compression passageway 58 adjacent the chamber inlet 56, moved downward and rearward toward the pick-up 32, whereupon the feeder forks 70 may be withdrawn from the pre-compression passageway 58 and returned to the initial or starting position. The feeder forks 70 are moved in the second direction 76, i.e., reverse, to dislodge the plug of crop material in the pre-compression passageway 58.

The baler controller 88 may monitor the status of the crop material in the pre-compression passageway 58 to determine if the plug condition 98 persists or not, i.e., to determine if the plug of crop material has been dislodged from the pre-compression passageway 58. The baler controller 88 may use data from the baler sensor 86A, 86B, 86C to determine if the plug condition 98 remains or has been dislodged and removed from the pre-compression passageway 58. For example, if the baler sensor 86A, 86B, 86C includes an optical sensor 86B, then an image of the pre-compression passageway 58 may show no crop material within the pre-compression passageway 58, indicating that the plug condition 98 has been removed.

In another implementation, the baler controller 88 may determine that the plug condition 98 has been removed based on time. For example, the baler controller 88 may determine that the plug condition 98 has been removed after moving the feed system 68 in the second direction 76 for a defined period of time. As such, the baler controller 88 may determine that the plug condition 98 has been removed after reverse operation of the feed system 68 for the defined period of time.

Once the baler controller 88 has determined that the plug condition 98 has been remedied, i.e., that the plug of the crop material has been dislodged from the pre-compression passageway 58, then the baler controller 88 may control the panel actuator 84 from the second state, by which the access panel 80 is positioned in the access position, into the first state, by which the access panel 80 is positioned in the operating position. In other words, the baler controller 88 controls the panel actuator 84 to move the access panel 80 from the access position into the operating position in order to continue normal baling operations.

Similarly, once the baler controller 88 has determined that the plug condition 98 has been remedied, i.e., that the plug of the crop material has been dislodged from the pre-compression passageway 58, then the baler controller 88 may control the power source of the drive system 72 to move the feed system 68 in the first direction 74. Accordingly, the baler controller 88 controls the power source to stop movement in the second direction 76 and return movement to the first direction 74 to resume normal baling operations.

Once the access panel 80 has been returned to the operating position and the drive system 72 is running in the first direction 74, then the baler controller 88 may communicate a start command. In one implementation, the start command may automatically begin forward movement of the associated traction unit 20. For example, the start command may include the baler controller 88 automatically communicating a throttle command to the traction unit 20 commanding the throttle to a desired operating position, whereby the traction unit 20 and the baler implement 20 begin movement relative to the ground surface. The start command may further include the baler controller 88 automatically communicating a brake command to the braking system of the traction unit 20 commanding release of the braking system. In another implementation, the start command may communicate an instruction to the operator of the associated traction unit 20 requesting the operator start forward movement of the associated traction unit 20 and the baler implement 20. The baler controller 88 may then monitor forward motion to determine when the traction unit 20 and the baler implement 20 have begun to move forward relative to the ground surface.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (20) comprising:
a pre-compression passageway (58) including a lower passage wall (60) having an access panel (80) moveable between an operating position for guiding crop material through the pre-compression passageway (58) and an access position for opening and providing access to the pre-compression passageway (58);
a panel actuator (84) coupled to the access panel (80) and selectively controllable between a first state positioning the access panel (80) in the operating position and a second state positioning the access panel (80) in the access position;
a feed system (68) having a feeder fork (70) operable to move crop material through the pre-compression passageway (58);
a drive system (72) coupled to the feed system (68) and including a power source (78, 30) selectively controllable to move the feed system (68) in a first direction (74) during a baling operation and a second direction (76) during an un-plugging operation;
a baler controller (88) having a processor (90) and a memory (92) having a feed control algorithm (94) stored thereon, wherein the processor (90) is operable to execute the feed control algorithm (94) to:
identify a plug condition from data related to an operating characteristic of the baling operation, wherein the plug condition indicates a plug of crop material in the pre-compression passageway (58); and
automatically initiate the un-plugging operation when the plug condition is identified.

2. The baler implement (20) set forth in claim 1, further comprising a baler sensor (86A, 86B, 86C) operable to sense data related to the operating characteristic of the baling operation associated with movement of crop material through the pre-compression passageway (58).

3. The baler implement (20) set forth in claim 1 or 2, further comprising a pick-up (32) operable to gather and move crop material, with the pre-compression passageway (58) positioned to receive the crop material from the pick-up (32), wherein the pick-up (32) includes a shaft member (96) rotatable about an axis during operation, and wherein the baler sensor (86A, 86B, 86C) includes a rotational speed sensor (86A) positioned and operable to detect data related to a rotational speed of the shaft member (96).

4. The baler implement (20) according to at least one of the preceding claims, wherein the baler sensor (86A, 86B, 86C) includes an optical sensor (86B) positioned to capture an image of crop material disposed within the pre-compression passageway (58).

5. The baler implement (20) according to at least one of the preceding claims, wherein the baler sensor (86A, 86B, 86C) includes a force sensor (86C) coupled to the feed system (68) and operable to detect data related to a force applied to the feeder fork (70) as the feeder fork (70) moves through the pre-compression passageway (58).

6. The baler implement (20) according to at least one of the preceding claims, wherein the un-plugging operation includes the processor (90) executing the feed control algorithm (94) to communicate a stop command.

7. The baler implement (20) according to at least one of the preceding claims, wherein communicating the stop command includes one of the processor (90) executing the feed control algorithm (94) to automatically stop forward movement of an associated traction unit (20) or the processor (90) executing the feed control algorithm (94) to communicate an instruction to an operator of an associated traction unit (20) requesting the operator stop forward movement of the associated traction unit (20)

8. The baler implement (20) according to at least one of the preceding claims, wherein the un-plugging operation includes the processor (90) executing the feed control algorithm (94) to control the panel actuator (84) from the first state positioning the access panel (80) in the operating position to the second state positioning the access panel (80) in the access position.

9. The baler implement (20) according to at least one of the preceding claims, wherein the un-plugging operation includes the processor (90) executing the feed control algorithm (94) to control the power source (78, 30) of the drive system (72) to move the feed system (68) in the second direction (76) to dislodge the plug of crop material in the pre-compression passageway (58) when the panel actuator (84) is in the second state.

10. The baler implement (20) according to at least one of the preceding claims, wherein the un-plugging operation includes the processor (90) executing the feed control algorithm (94) to control the panel actuator (84) from the second state positioning the access panel (80) in the access position into the first state positioning the access panel (80) in the operating position after moving the feed system (68) in the second direction (76) for a defined period of time.

11. The baler implement (20) according to at least one of the preceding claims, wherein the un-plugging operation includes the processor (90) executing the feed control algorithm (94) to determine if the plug of crop material is dislodged from the pre-compression passageway (58).

12. The baler implement (20) according to at least one of the preceding claims, wherein the un-plugging operation includes the processor (90) executing the feed control algorithm (94) to control the panel actuator (84) from the second state positioning the access panel (80) in the access position into the first state positioning the access panel (80) in the operating position after the plug of the crop material has been determined to be dislodged from the pre-compression passageway (58).

13. The baler implement (20) according to at least one of the preceding claims, wherein the un-plugging operation includes the processor (90) executing the feed control algorithm (94) to control the power source (78, 30) of the drive system (72) to move the feed system (68) in the first direction (74) after moving the feed system (68) in the second direction (76) for a defined period of time or until the plug of crop material has been determined to be dislodged from the pre-compression passageway (58).

14. The baler implement (20) according to at least one of the preceding claims, wherein the un-plugging operation includes the processor (90) executing the feed control algorithm (94) to communicate a start command.

15. The baler implement (20) according to at least one of the preceding claims, wherein communicating the start command includes one of the processor (90) executing the feed control algorithm (94) to automatically engage forward movement of an associated traction unit (20) or the processor (90) executing the feed control algorithm (94) to communicate an instruction to an operator of an associated traction unit (20) requesting the operator engage forward movement of the associated traction unit (20).
